# EUROPÄISCHE PATENTSCHRIFT

(11) **EP 0 816 190 B1**
(45) Veröffentlichungstag und Bekanntmachung des Hinweises auf die Patenterteilung: **10.10.2001**
(21) Anmeldenummer: 97109279.6
(22) Anmeldetag: 09.06.1997
(51) Int. Cl.: B60R 25/02

(54) **Lenkschloss für Kraftfahrzeuge**
Steering lock for a motor vehicle
Verrou de direction pour véhicule à moteur

(30) Priorität: 24.06.1996 DE 29611043 U
(43) Veröffentlichungstag der Anmeldung: 07.01.1998
(73) Patentinhaber: HUF HÜLSBECK & FÜRST GMBH & CO. KG, 42551 Velbert (DE)
(72) Erfinder: Pieper, Friedrich, 84513 Töging (DE)
(74) Vertreter: Oedekoven, Wolf-Dieter, Dipl.-Ing.

(56) Entgegenhaltungen:
- DE-A- 2 501 245
- DE-A- 2 633 796
- DE-A- 2 713 381

## Beschreibung

Die Erfindung bezieht sich auf ein Lenkschloß für Kraftfahrzeuge der im Oberbegriff des Patentanspruchs 1 angegebenen Gattung.

Derartige Kraftfahrzeug-Lenkschlösser sind bekannt ( DE-A -2 501 245, Fig.9). Ihr Sperrglied ist von einem im Lenkschloßgehäuse quer zum Steuernocken axial verschiebbaren Sperrbolzen gebildet, welcher in die Verriegelungsstellung federbelastet und mittels des Steuernockens entgegen der Wirkung der Federbelastung aus der Verriegelungsstellung in die Entriegelungsstellung bewegbar ist. Um den Steuernocken im Lenkschloßgehäuse axial festzulegen, wenn der Schließzylinder nicht eingebaut ist, wird der Steuernocken im Lenkschloßgehäuse in eine Stellung gedreht, in welcher der in die innere Ringnut des Lenkschloßgehäuses ragende radiale Vorsprung des Steuernockens nicht mit der in die innere Ringnut mündenden inneren Längsnut des Lenkschloßgehäuses fluchtet, in welcher der Vorsprung in die innere Ringnut läuft, wenn der Steuernocken in das Lenkschloßgehäuse eingeschoben wird. In dieser Drehstellung ist der Steuernocken durch den Sperrbolzen gesichert, welcher sich in der Verriegelungsstellung befindet und durch seine Federbelastung gegen den Steuernocken gedrückt wird.

Der Erfindung liegt die Aufgabe zugrunde, ein Lenkschloß für Kraftfahrzeuge der im Oberbegriff des Patentanspruchs 1 angegebenen Art zu schaffen, bei welchem die Drehsicherung des im Lenkschloßgehäuse axial festgelegten Steuernockens verbessert ist.

Diese Aufgabe ist durch die im kennzeichnenden Teil des Patentanspruchs 1 angegebenen Merkmale gelöst. Vorteilhafte Ausgestaltungen des erfindungsgemäßen Lenkschloßes für Kraftfahrzeuge sind in den restlichen Patentansprüchen angegeben.

Beim Kraftfahrzeug-Lenkschloß nach der Erfindung ist der im Lenkschloßgehäuse axial gehalterte Steuernocken sehr zuverlässig gegen Herausdrehen aus der Drehstellung gesichert, die er dann einnimmt. Die Drehsicherung erfolgt vollkommen unabhängig vom Sperrglied, so daß auf dasselbe keinerlei Rücksicht genommen werden muß.

Nachstehend ist eine Ausführungsform des erfindungsgemäßen Lenkschlosses für Kraftfahrzeuge anhand von Zeichnungen beispielsweise beschrieben. Darin zeigt:
Fig. 1 den Längsschnitt entlang der Linie I-I in Fig. 2 im Zustand " Halt nach Schlüsselabzug";
Fig. 2 den Querschnitt entlang der Linie II-II in Fig. 1;
Fig. 3 den Längsschnitt gemäß Fig.1 im Zustand " Fahrt ";
Fig. 4 den Längsschnitt gemäß Fig. 1 im Zustand Halt vor Schlüsselabzug ";
Fig. 5 den Längsschnitt entlang der Linie V-V in Fig. 6 des Lenkschloßgehäuses und des darin axial gehalterten sowie undrehbar festgelegten Steuernockens des Kraftfahrzeug-Lenkschlosses nach Fig. bis 4;
Fig. 6 den Querschnitt entlang der Linie VI-VI in Fig. 5;
Fig. 7 den Längsschnitt entlang der Linie VII-VII in Fig. 6.

Das dargestellte Lenkschloß für Kraftfahrzeuge weist ein Gehäuse 1, einen Steuernocken 2, einen Schließzylinder 3, einen elektrischen Zündanlaßschalter 4 und ein nicht gezeigtes Sperrglied zur Verriegelung der jeweiligen Kraftfahrzeug-Lenkspindel gegen Drehen auf.

Der Zündanlaßschalter 4 ist in einem topfförmigen Endabschnitt 5 des Lenkschloßgehäuses 1 befestigt, der Schließzylinder 3 in einer Bohrung 6 am anderen Ende des Lenkschloßgehäuses 1. Zwischen dem Schließzylinder 3 und dem Zündanlaßschalter 4 ist der Steuernocken 2 im Lenkschloßgehäuse 1 angeordnet.

Der Steuernocken 2 dient zur Steuerung der Bewegung des Sperrgliedes zwischen der Verriegelungsstellung und der Entriegelungsstellung mittels eines Exzenters 7 und zur Betätigung des Zündanlaßschalters 4 mittels einer Schaltwelle 8, welche mit ihrem profilierten freien Ende 9 in den Zündanlaßschalter 4 eingreift. Der Steuernocken 2 ist im Lenkschloßgehäuse 1 drehbar und axial verschieblich gelagert, durch eine Schraubendruckfeder 10 auf den Schließzylinder 3 zu belastet und mittels des Schließzylinders 3 betätigbar. Die Schraubendruckfeder 10 ist auf die Schaltwelle 8 aufgesteckt und stützt sich einerseits an einer Ringschulter 11 der Schaltwelle 8 und andererseits an einer Ringschulter 12 des Lenkschloßgehäuses 1 ab.

Der Schließzylinder 3 besteht aus einem äußeren Zylindergehäuse 13 und einem inneren Zylinderkern 14. Das Zylindergehäuse 13 ist mittels eines axial verschiebbaren, durch eine Schraubendruckfeder 15 belasteten, radialen Raststiftes 16 im Lenkschloßgehäuse 1 lösbar befestigt, welcher in eine Bohrung 17 des Lenkschloßgehäuses 1 eingreift. Der Zylinderkern 14 ist im Zylindergehäuse 13 mit Hilfe des zugehörigen Schlüssels 18 drehbar und axial verschiebbar und weist ein profiliertes hinteres Ende 19 zur drehfesten Kupplung mit dem Steuernocken 2 auf. Das Zylinderkernende 19 greift in eine Vertiefung 20 entsprechender unrunder Querschnittsgestalt ein, welche in einem dem Schließzylinder 3 benachbarten Steuernockenabschnitt 21 größeren Durchmessers vorgesehen ist.

Das Lenkschloß funktioniert folgendermaßen.

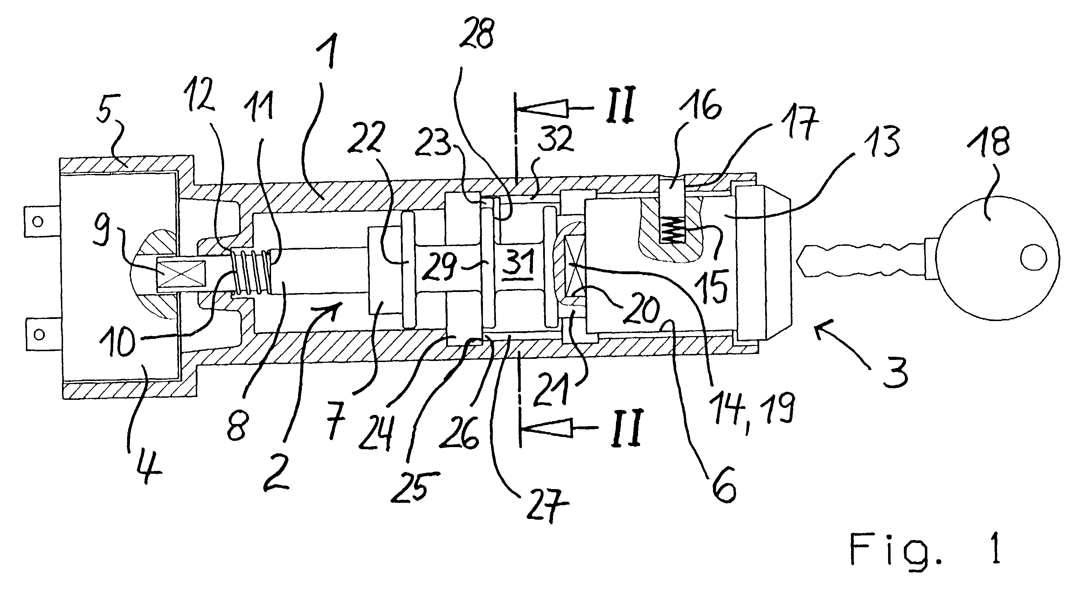

Im Lenkschloßzustand " Halt nach Schlüsselabzug " gemäß Fig. 1 nimmt das nicht dargestellte Sperrglied, beispielsweise ein quer zum Steuernocken 2 axial verschiebbarer Sperrbolzen, die Verriegelungsstellung ein, um die zugehörige Kraftfahrzeug-Lenkspindel gegen Drehen zu sperren. Der Zündanlaßschalter 4 unterbricht die Stromzufuhr zu den angeschlossenen Verbrauchern. Der Zylinderkern 14 des Schließzylinders 3 und der Steuernocken 2 befinden sich in der äußeren axialen Endstellung, in welcher der Steuernocken 2 am Zylindergehäuse 13 des Schließzylinders 3 anliegt.

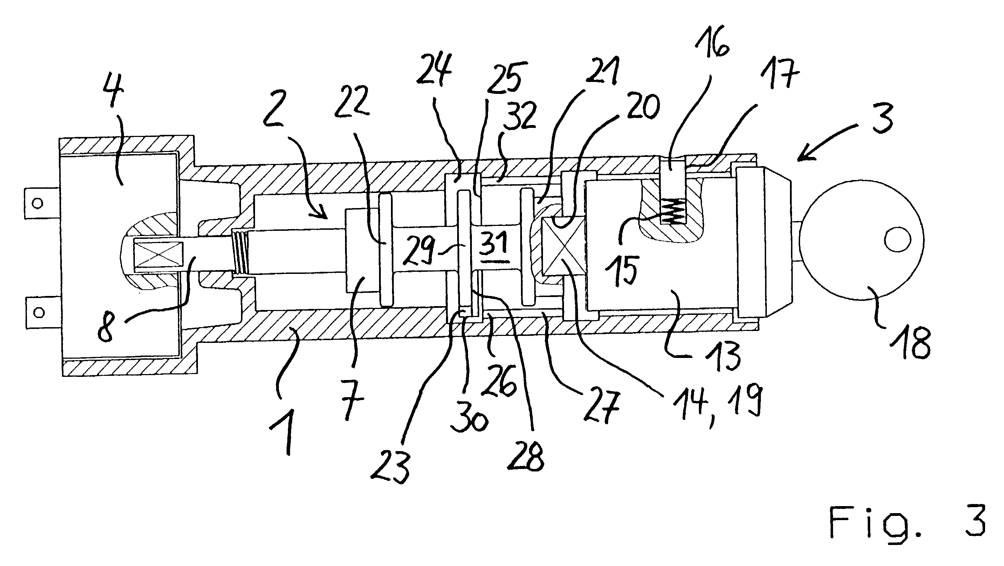

Wird nunmehr der Schlüssel 18 in den Zylinderkern 14 des Schließzylinders 3 gesteckt und danach zusammen mit dem Zylinderkern 14 sowie dem Steuernocken 2 zunächst entgegen der Wirkung der auf der Schaltwelle 8 sitzenden Schraubendruckfeder 10 axial bewegt sowie anschließend um 180° gedreht, dann bewegt der Exzenter 7 des Steuernockens 2 das in die Verriegelungsstellung federbelastete Sperrglied entgegen der Wirkung der Federbelastung in die Entriegelungsstellung, so daß die Kraftfahrzeug-Lenkspindel gedreht werden kann. Spätestens bei Erreichen der Entriegelungsstellung springt ein federbelastetes Sicherungselement des Sperrgliedes über einen Sicherungsvorsprung 22 des Steuernockens 2, welcher neben dem Exzenter 7 des Steuernockens 2 vorgesehen ist und einen kreisrunden Umriß aufweist. Es ergibt sich der Lenkschloßzustand " Fahrt " gemäß Fig. 3, in welchem der Zündanlaßschalter 4 den angeschlossenen Zündstromkreis schließt.

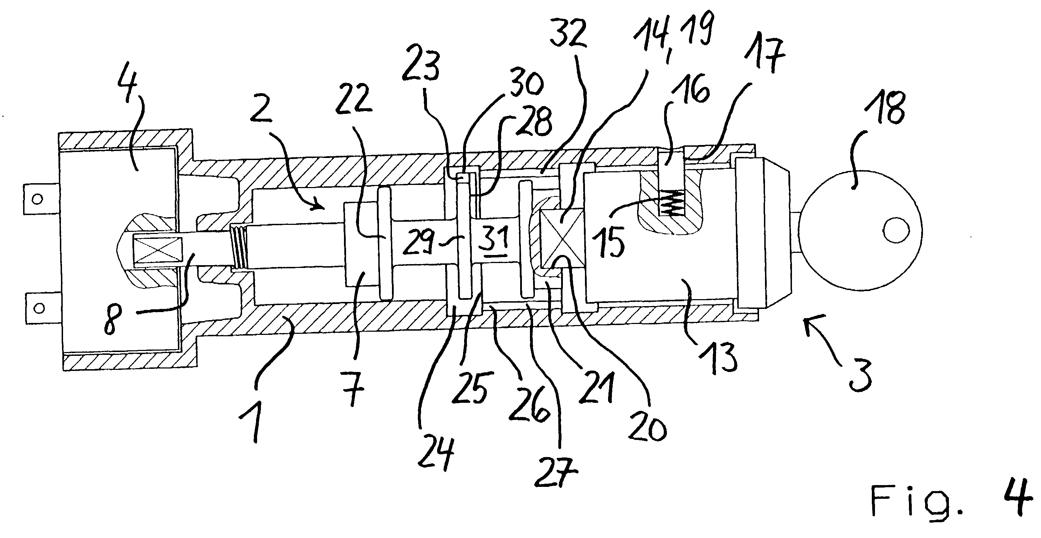

Das Zurückdrehen des Schlüssels 18 zusammen mit dem Zylinderkern 14 des Schließzylinders 3 und dem Steuernocken 2 in die Ausgangsstellung führt zum Lenkschloßzustand " Halt vor Schlüsselabzug " gemäß Fig. 4, in welchem der Exzenter 7 des Steuernockens 2 das Sperrglied zwar freigibt, es aber durch sein auf dem Sicherungsvorsprung 22 des Steuernockens 2 aufliegendes Sicherungselement in der Entriegelungsstellung gehalten bleibt. Erst dann, wenn nunmehr der Schlüssel 18 aus dem Zylinderkern 14 des Schließzylinders 3 abgezogen wird, kann die auf den Steuernocken 2 einwirkende Schraubendruckfeder 10 den Steuernocken 2 und den Zylinderkern 14 aus der inneren axialen Endstellung gemäß Fig. 4 in die äußere axiale Endstellung gemäß Fig. 1 schieben, so daß der Sicherungsvorsprung 22 des Steuernockens 2 unter dem Sicherungselement des Sperrgliedes wegläuft und das Sperrglied unter der Wirkung seiner Federbelastung in die Verriegelungsstellung laufen kann.

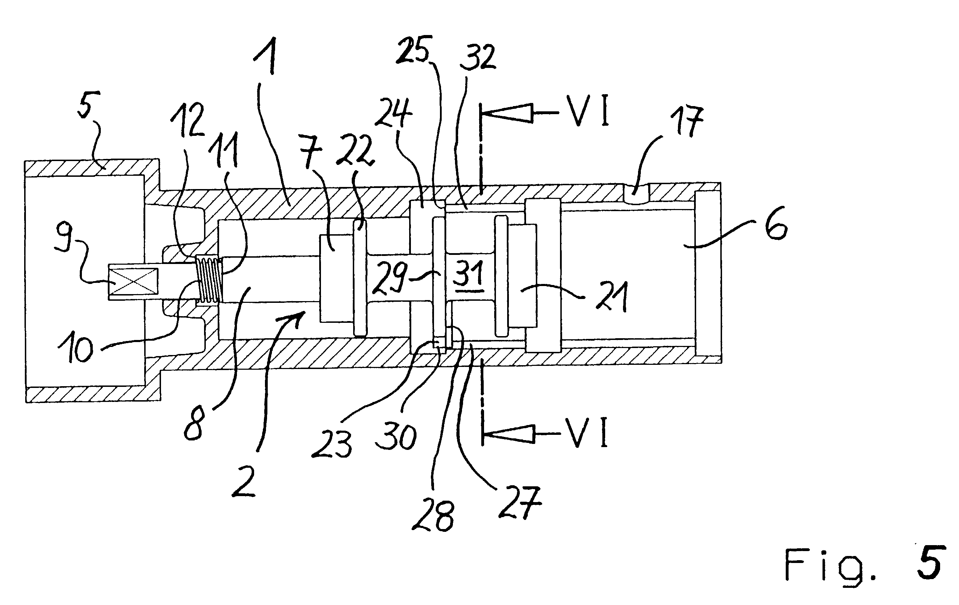

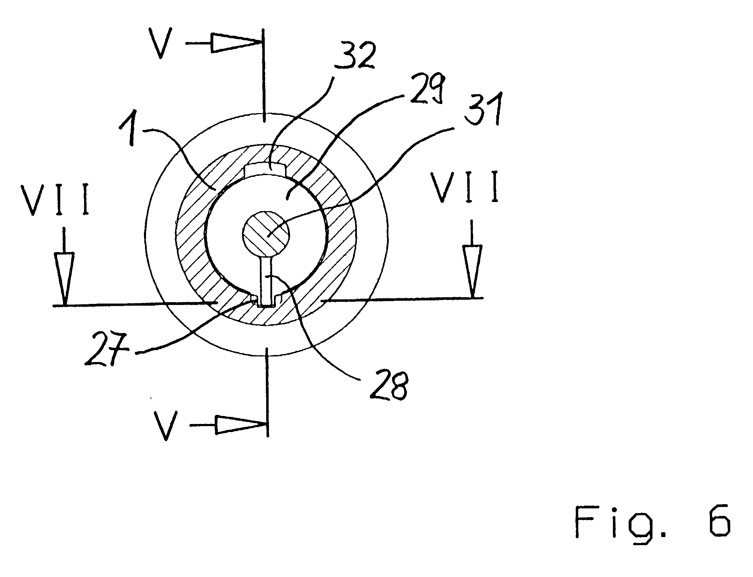

Für die Lagerung und den Transport des Lenkschlosses ohne den Schließzylinder 3 und den Zündanlaßschalter 4 wird der Steuernocken 2 im Lenkschloßgehäuse 1 unverlierbar festgelegt, wie aus Fig. 5 bis 7 ersichtlich. Zu diesem Zweck weist der Steuernocken 2 einen radialen Vorsprung 23 und das Lenkschloßgehäuse 1 eine innere Ringnut 24 auf, in welche der Vorsprung 23 eingreift und deren der Schraubendruckfeder 10 des Steuernockens 2 fernere sowie der Bohrung 6 des Lenkschloßgehäuses 1 für den Schließzylinder 3 benachbarte Seitenwand 25 mit einer Vertiefung 26 zur Aufnahme des Vorsprungs 23 versehen ist.

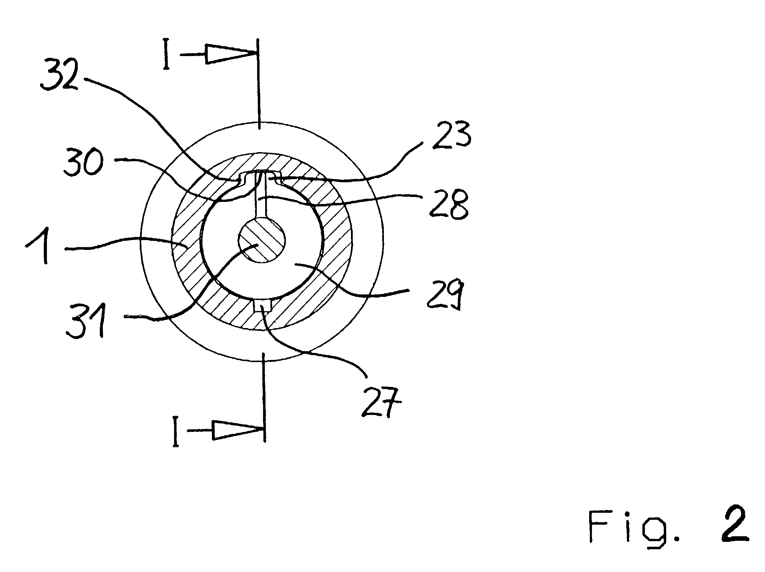

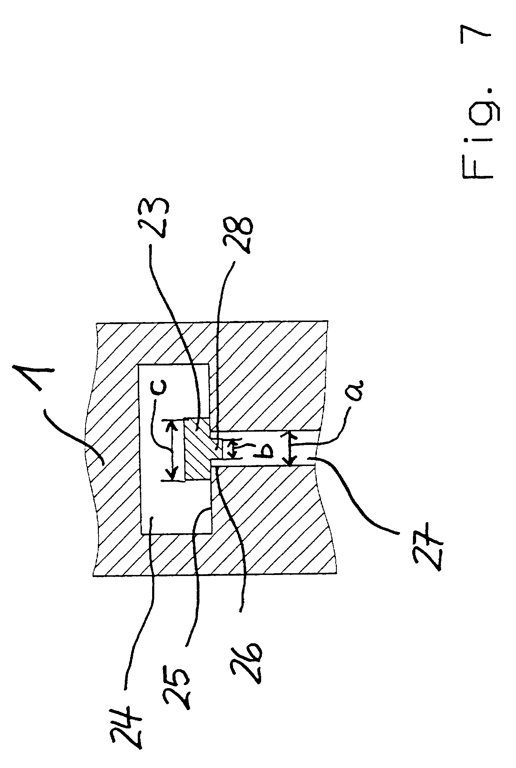

Die Vertiefung 26 ist von der Mündung einer zur inneren Ringnut 24 führenden inneren Längsnut 27 des Lenkschloßgehäuses 1 gebildet und zum Eingriff in die Vertiefung 26 bzw. Mündung der inneren Längsnut 27 dient eine Nase 28 des Vorsprungs 23 des Steuernockens 2. Die Nase 28 ist auf der der Schraubendruckfeder 10 des Steuernockens 2 ferneren sowie der Bohrung 6 des Lenkschloßgehäuses 1 für den Schließzylinder 3 benachbarten Seite des Vorsprungs 23 vorgesehen und schmaler als der Vorsprung 23, wie aus Fig. 2, 6, 7 hervorgeht. Fig. 7 zeigt besonders deutlich, daß die Breite a der inneren Längsnut 27 des Lenkschloßgehäuses 1 nur geringfügig größer als die Breite b der Nase 28 des Vorsprungs 23 des Steuernockens 2 und die Breite c des Vorsprungs 23 merklich größer als die Breite a der inneren Längsnut 27 des Lenkschloßgehäuses 1 ist.

Der Vorsprung 23 des Steuernockens 2 steht von einem als kreisrunde Scheibe ausgebildeten Steuernockenabschnitt 29 radial ab, welcher zwischen dem Steuernockenabschnitt 21 zur drehfesten Verbindung des Steuernockens 2 mit dem Zylinderkern 14 des Schließzylinders 3 und dem Steuernockenabschnitt angeordnet ist, mit welchem der Steuernocken 2 mit dem Sperrglied zusammenwirkt, welcher also vom Exzenter 7 und vom Sicherungsvorsprung 22 gebildet ist, und von welchem die Schaltwelle 8 absteht. Die Nase 28 des Vorsprungs 23 erstreckt sich als radiale Leiste von der Endkante 30 des Vorsprungs 23 an demselben und dem scheibenförmigen Steuernockenabschnitt 29 mit kreisrundem Umriß entlang bis zu einem diesen Steuernockenabschnitt 29 und den Steuernockenabschnitt 21 für die Aufnahme des Zylinderkernendes 19 verbindenden stabförmigen Steuernockenabschnitt 31.

Wenn der Steuernocken 2 in das Lenkschloßgehäuse 1 eingeführt wird, läuft der radiale Vorsprung 23 des Steuernockens 2 in einer zur inneren Ringnut 24 des Lenkschloßgehäuses 1 führenden inneren Längsnut 32 des Lenkschloßgehäuses 1 in die innere Ringnut 24. Diese innere Längsnut 32 ist geringfügig breiter als der Vorsprung 23, wie Fig. 2 zeigt, und ist gegenüber der Vertiefung 26 des Lenkschloßgehäuses 1 zur Aufnahme des radialen Vorsprungs 23 des Steuernockens 2 bzw. der anderen inneren Längsnut 27 des Lenkschloßgehäuses 1 um 180° versetzt.

Um den Steuernocken 2 im Lenkschloßgehäuse 1 unverlierbar festzulegen, wird er in die Stellung gemäß Fig. 3 gedreht, in welcher der radiale Vorsprung 23 des Steuernockens 2 von der breiteren inneren Längsnut 32 des Lenkschloßgehäuses 1 und ihrer Mündung in der benachbarten Seitenwand 25 der inneren Ringnut 24 des Lenkschloßgehäuses 1 entfernt ist und mit seiner Nase 28 auf die Vertiefung 26 bzw. die Mündung der schmaleren inneren Längsnut 27 des Lenkschloßgehäuses 1 ausgerichtet ist, so daß die auf den Steuernocken 2 einwirkende Schraubendruckfeder 10 die Nase 28 in die Vertiefung 26 bzw. Mündung der inneren Längsnut 27 schiebt, wie aus Fig. 5 bis 7 ersichtlich. Der Steuernocken 2 stützt sich dann mit seinem radialen Vorsprung 23 an der Seitenwand 25 der inneren Ringnut 24 des Lenkschloßgehäuses 1 ab und ist durch den Eingriff der Nase 28 des Vorsprungs 23 in die Vertiefung 26 der Seitenwand 25 daran gehindert, sich zu verdrehen und mit dem Vorsprung 23 vor die das Einführen des Steuernockens 2 in das Lenkschloßgehäuse 1 ermöglichende innere Längsnut 32 des Lenkschloßgehäuses 1 zu gelangen, um das Lenkschloßgehäuse 1 unter Passieren der inneren Längsnut 32 mit dem Vorsprung 23 verlassen zu können.

In dem zündanlaßschalterlosen und schließzylinderlosen Lager- und Transportzustand des Lenkschlosses nach Fig. 5 bis 7 läßt sich der Schließzylinder 3 ohne weiteres unter Eintritt des Zylinderkernendes 19 in die Vertiefung 20 des vorderen Steuernockenabschnitts 21 einschieben in die axiale Bohrung 6 des Lenkschloßgehäuses 1 und darin mit Hilfe des in die radiale Bohrung 17 des Lenkschloßgehäuses 1 eintretenden Raststiftes 16 verrasten. Das Lenkschloß ist danach sofort betriebsbereit, wenn auch der Zündanlaßschalter 4 montiert ist. Es liegt dann der Lenkschloßzustand " Fahrt " gemäß Fig. 3 vor.

## Patentansprüche

1. Lenkschloß für Kraftfahrzeuge mit einem Sperrglied zur Verriegelung der Kraftfahrzeug-Lenkspindel gegen Drehen, einem Steuernocken (2), zur Steuerung der Bewegung des Sperrgliedes zwischen der Verriegelungsstellung und der Entriegelungsstellung, einem Schließzylinder (3) zur Betätigung des Steuernockens (2) und einem Gehäuse (1), in welchem der Steuernocken drehbar gelagert und der Schließzylinder (3) befestigt ist, dessen drehbarer Zylinderkern (14) mit dem Steuernocken (2) drehfest verbunden ist, wobei zur axialen Halterung des Steuernockens (2) im Lenkschloßgehäuse (1) vor dem Einbau des Schließzylinders am Steuernocken (2) ein radialer Vorsprung (23) für den Eingriff in eine innere Ringnut (24) des Lenkschloßgehäuses (1) vorgesehen ist, zu welcher sich eine innere Längsnut (32) des Lenkschloßgehäuses (1) für die Aufnahme des Vorsprungs (23) beim Einführen des Steuernockens (2) in das Lenkschloßgehäuse (1) erstreckt, **dadurch gekennzeichnet, daß** der Steuernocken (2) im Lenkschloßgehäuse (1) axial verschiebbar und auf den Schließzylinder (3) zu federbelastet ist und eine Vertiefung (26) zur Aufnahme des radialen Vorsprungs (23) des Steuernockens (2) in der dem Schließzylinder (3) benachbarten Seitenwand (25) der inneren Ringnut (24) des Lenkschloßgehäuses (1) zusätzlich zur Mündung der inneren Längsnut (32) des Lenkschloßgehäuses (1) vorgesehen ist.

2. Lenkschloß nach Anspruch 1, **dadurch gekennzeichnet, daß** die Vertiefung (26) in der dem Schließzylinder (3) benachbarten Seitenwand (25) der inneren Ringnut (24) des Lenkschloßgehäuses (1) von der Mündung einer zweiten zur inneren Ringnut (24) führenden inneren Längsnut (27) des Lenkschloßgehäuses (1) gebildet ist und der radiale Vorsprung (23) des Steuernockens (2) auf der dem Schließzylinder (3) zugewandten Seite eine schmalere Nase (28) für den Eingriff in die Mündung der zweiten inneren Längsnut (27) des Lenkschloßgehäuses (1) aufweist, deren Breite (a) der Breite (b) der Nase (28) etwa entspricht und geringer als die Breite (c) des Vorsprungs (23) des Steuernockens (2) ist.

3. Lenkschloß nach Anspruch 1 oder 2, **dadurch gekennzeichnet, daß** der Vorsprung (23) des Steuernockens (2) von einem scheibenförmigen Steuernockenabschnitt (29) mit kreisrundem Umriß radial absteht.

4. Lenkschloß nach Anspruch 3, **dadurch gekennzeichnet, daß** der scheibenförmige Steuernockenabschnitt (29) zwischen einem Steuernockenabschnitt (7,22) für das Zusammenwirken mit dem Sperrglied und einem Steuernockenabschnitt (21) zur drehfesten Verbindung mit dem Zylinderkern (14) des Schließzylinders (3) vorgesehen ist.

5. Lenkschloß nach Anspruch 3 oder 4, **dadurch gekennzeichnet, daß** die Nase (28) des Vorsprungs (23) des Steuernockens (2) sich radial über den Vorsprung (23) und den scheibenförmigen Steuernockenabschnitt (29) erstreckt.

## Claims

1. Steering lock for motor vehicles with a locking member for locking the motor vehicle steering column against rotation, a control cam (2) for controlling the movement of the locking member between the locking position and the unlocked position, a lock cylinder (3) for operating the control cam (2) and a housing (1) in which the control cam is rotatably mounted and which retains the lock cylinder (3), of which the rotatable barrel (14) is connected to the control cam (2) in a manner preventing relative rotation, wherein for axially retaining the control cam (2) in the steering lock housing(1) before the introduction of the lock cylinder a radial projection (23) is provided on the control cam (2) for engagement in an internal annular groove (24) in the steering lock housing (1), to which an internal longitudinal groove (32) in the steering lock housing (1) leads for receiving the projection (23) on introduction of the control cam (2) into the steering lock housing (1), **characterised in that** the control cam (2) is axially displaceable in the steering lock housing (1) and is spring-urged towards the lock cylinder (3) and a recess (26) is provided for receiving the radial projection (23) on the control cam (2) in the side wall (25) of the internal annular groove (24) in the steering lock housing (1) adjacent to the lock cylinder (3) in addition to the mouth of the internal longitudinal groove (32) in the steering lock housing (1).

2. Steering lock according to claim 1, **characterised in that** the recess (26) in the side wall (25) of the internal annular groove (24) in the steering lock housing (1) adjacent to the lock cylinder (3) is formed by the mouth of a second internal longitudinal groove (27) leading to the internal annular groove (24) and the radial projection (23) on the control cam (2) has on the side which faces towards the lock cylinder (3) a smaller nose (28) for engaging in the mouth of the second internal longitudinal groove (27) in the steering lock housing (1), of which the width (a) corresponds approximately to the width (b) of the nose (28) and is smaller than the width (c) of the projection (23) on the control cam (2).

3. Steering lock according to claim 1 or 2, **characterised in that** the projection (23) on the control cam (2) stands up radially from a disc-shaped control cam portion (29) of circular outline.

4. Steering lock according to claim 3, **characterised in that** the disc-shaped control cam portion (29) is provided between a control cam portion (7, 22) for co-operating with the locking member and a control cam portion (21) for connection in a relatively non-rotatable manner to the barrel (14) of the lock cylinder (3).

5. Steering lock according to claim 3 or 4, **characterised in that** the nose (28) of the projection (23) on the control cam (2) extends radially along the projection (23) and the disc-shaped control cam portion (29).

## Revendications

1. Antivol de direction pour véhicules automobiles, comportant un organe de blocage destiné au verrouillage de la colonne de direction du véhicule automobile afin qu'il ne puisse pas tourner, une came de commande (2) destinée à la commande du mouvement de l'organe de blocage entre la position verrouillée et la position déverrouillée, une serrure (3) destiné à l'actionnement de la came de commande (2), et un corps (1) dans lequel est montée en rotation la came de commande et est fixé la serrure (3), dont le barillet rotatif (14) est relié solidairement à la came de commande (2), une saillie radiale (23) pour l'engagement dans une rainure annulaire intérieure (24) du corps (1) de l'antivol de direction étant prévue sur la came de commande (2) pour la retenue axiale de la came de commande (2) dans le corps (1) de l'antivol de direction avant le montage de la serrure , vers laquelle s'étend une rainure longitudinale intérieure (32) du corps (1) de l'antivol de direction pour la réception de la saillie (23) lors de l'insertion de la came de commande (2) dans le corps (1) de l'antivol de direction, **caractérisé en ce que** la came de commande (2) est axialement mobile dans le corps (1) de l'antivol de direction et est chargée par ressort en direction de la serrure (3), et **en ce que**, pour la réception de la saillie radiale (23) de la came de commande (2), il est prévu un renfoncement (26) dans la paroi latérale (25) contiguë à la serrure (3) de la rainure annulaire intérieure (24) du corps (1) de l'antivol de direction outre le débouché de la rainure longitudinale intérieure (32) du corps (1) de l'antivol de direction.

2. Antivol de direction selon la revendication 1, **caractérisé en ce que** le renfoncement (26) pratiqué dans la paroi latérale (25) contiguë à la serrure (3) de la rainure annulaire intérieure (24) du corps (1) de l'antivol de direction est formé par le débouché d'une deuxième rainure longitudinale intérieure (27) conduisant à la rainure annulaire intérieure (24) du corps (1) de l'antivol de direction, et **en ce que**, du côté orienté vers la serrure (3), la saillie radiale (23) de la came de commande (2) comporte un tenon (28) plus étroit pour l'engagement dans le débouché de la deuxième rainure longitudinale intérieure (27) du corps (1) de l'antivol de direction, dont la largeur (a) correspond sensiblement à la largeur (b) du tenon (28), et est inférieure à la largeur (c) de la saillie (23) de la came de commande (2).

3. Antivol de direction selon la revendication 1 ou 2, **caractérisé en ce que** la saillie (23) de la came de commande (2) dépasse radialement d'un tronçon (29) en forme de disque à contour circulaire de la came de commande.

4. Antivol de direction selon la revendication 3, **caractérisé en ce que** le tronçon (29) en forme de disque de la came de commande est prévu entre un tronçon (7, 22) de la came de commande destiné à la coopération avec l'organe de blocage, et un tronçon (21) de la came de commande destiné à la liaison solidaire avec le barillet (14) de la serrure (3).

5. Antivol de direction selon la revendication 3 ou 4, **caractérisé en ce que** le tenon (28) de la saillie (23) de la came de commande (2) s'étend radialement le long de la saillie (23) et du tronçon (29) en forme de disque de la came de commande.
